# EUROPEAN PATENT SPECIFICATION

(11) **EP 3 378 563 B1**
(45) Date of publication and mention of the grant of the patent: **22.04.2020**
(21) Application number: 18159404.5
(22) Date of filing: 01.03.2018
(51) Int. Cl.: B01L 3/02, G01N 35/10, G01N 35/04

(54) **DROPLET DISPENSING APPARATUS**
TRÖPFCHENAUSGABEVORRICHTUNG
APPAREIL DE DISTRIBUTION DE GOUTTELETTES

(30) Priority: 24.03.2017 JP 2017059796
(43) Date of publication of application: 26.09.2018
(73) Proprietor: Toshiba TEC Kabushiki Kaisha, Tokyo 141-8562 (JP)
(72) Inventor: HIGUCHI, Masaaki, Shinagawa-ku, Tokyo 141-8562 (JP); KAIHO, Satoshi, Shinagawa-ku, Tokyo 141-8562 (JP); SHIMIZU, Seiya, Shinagawa-ku, Tokyo 141-8562 (JP); YOKOYAMA, Shuhei, Shinagawa-ku, Tokyo 141-8562 (JP); KUSUNOKI, Ryutaro, Shinagawa-ku, Tokyo 141-8562 (JP)
(74) Representative: Bandpay & Greuter

(56) References cited:
- JP-A- 2003 322 630
- US-A1- 2007 084 997
- US-A1- 2008 261 326
- US-A1- 2012 304 929
- US-B1- 6 998 230

## Description

### FIELD

Embodiments described herein relate generally to the field of microanalysis, and more particularly to a droplet dispensing apparatus and an analytic system comprising the same.

### BACKGROUND

In biological and pharmaceutical research and development, medical diagnosis/examination, and agricultural testing, analytic devices and testing methods involving dispensing liquids in volumes within a picoliter (pL) to microliter (µL) range are often used. By way of example only, JP 2003 322630 A describes such a biosensor, a biosensing system and a biosensing method where the sample solution is discharged into the reaction well; a sensor for measuring the amount of filling of droplets into the reaction well is provided and a sensor signal is outputted to a sensor signal analysis circuit and a drive control circuit configured to perform a drive control of an inkjet head. US 6998230 B1 discloses a drop disposing apparatus having a drop dispense unit and a sensing element. US 2008/0261326 A1 discloses a drop-on-demand system including a drop-on-demand mechanism, and a drop volume feedback subsystem and/or a vision subsystem.

For improved speed in testing and evaluation, a droplet dispensing apparatus typically ejects droplets of a liquid simultaneously from multiple nozzles into different wells of a microplate (also referred to as a multi-well plate) or the like.

When liquid is being dispensed simultaneously from a plurality of nozzles, there is a possibility that some of the nozzles might not discharge the liquid as intended. In such a case, the intended amount of liquid is not dispensed from a malfunctioning nozzle, which may cause erroneous evaluation results in some testing applications.

### SUMMARY OF INVENTION

To solve the above-cited problems, there is provided a droplet dispensing apparatus comprising: a droplet ejection array having a plurality of nozzles from which droplets can be ejected into a well opening of a microplate on a baseplate; a sensor configured to measure a value for detecting a liquid amount in the microplate; the sensor being one of a weight measuring device that measures a weight of the microplate and a transparency sensor that detects a presence or absence of droplets discharged from the nozzle in the plurality of nozzles based on a measured or otherwise detected transparency of the microplate; and a controller configured to detect that a nozzle in the plurality of nozzles is not discharging during a droplet ejection process based on an initial liquid amount in the microplate as detected by either the weight measuring device or the transparency sensor and a final liquid amount in the microplate as detected by either the weight measuring device or the transparency sensor during a droplet ejection process in which a predetermined number of droplets are to be ejected from the plurality of nozzles into the microplate, characterized in that the controller is further configured to: calculate an expected reduction due to drying during the droplet ejection process based on an initial measured value of the microplate by either the weight measuring device or the transparency sensor and a reference measured value of the microplate by either the weight measuring device or the transparency sensor after a lapse of a predetermined time from when the initial measured value is obtained; and signal that at least one nozzle in the plurality of nozzles is not discharging when a final measured value is less than the initial measured value plus any expected increase due to droplets ejected during the droplet ejection process between when the initial measured value was obtained and when the final measured value was obtained minus the expected reduction due to drying.

Preferably, the controller is further configured to calculate a drying reduction curve as a function of time connecting the measured values by either the weight measuring device or the transparency sensor at each of a plurality of set times from when the initial measured value is obtained.

Preferably still, the droplet dispensing apparatus further comprises a droplet ejection unit in addition to the droplet ejection array configured to dispense liquid towards the microplate on the baseplate.

Preferably yet, the droplet dispensing apparatus further comprises: a sealed box enclosing the droplet ejection array and at least a portion of the baseplate; and a spraying device configured to spray a liquid into the sealed box.

Suitably, the droplet dispensing apparatus further comprises a needle-like ejection member on the droplet ejection array configured to engage and open a lid on a periphery of a well opening of the microplate.

Suitably still, the droplet dispensing apparatus further comprises a movement mechanism attached to the baseplate and the droplet ejection array and configured to move the droplet ejection array such that droplets can be ejected into each well opening of the microplate.

Suitably yet, the droplet dispensing apparatus further comprises: a board having a first surface and a second surface, wherein the droplets can be ejected via the second surface of the board; a plurality of pressure chambers on the second surface of the board, each pressure chamber in the plurality being fluidly connected to a respective nozzle in the plurality of nozzles; a plurality of actuators that changes a pressure in a respective pressure chamber and causes liquid to be discharged from the respective nozzle; and a plurality of solution holding containers on the second surface of the board, each having a solution receiving port for receiving liquid and a solution outlet for supplying liquid with a respective pressure chamber.

Typically, the droplet dispensing apparatus further comprises a display unit to display information of the droplet dispensing apparatus.

The invention also relates to an analytic system comprising the droplet dispensing apparatus described above.

The invention also concerns a method for operating a droplet dispensing apparatus comprising a droplet ejection array having a plurality of nozzles from which droplets can be ejected into a well opening of a microplate on a baseplate, the method comprising: measuring a value for detecting a liquid amount in the microplate; the value being one of a weight of the microplate and a transparency of the microplate and determining that a nozzle in the plurality of nozzles is not discharging during a droplet ejection process based on an initial liquid amount and a final liquid amount in the microplate as detected during a droplet ejection process in which a predetermined number of droplets are to be ejected from the plurality of nozzles into the microplate, characterized in that the method further comprises: calculating an expected reduction due to drying during the droplet ejection process based on an initial measured value, either the weight or the transparency, of the microplate and a reference measured value, either the weight or the transparency, of the microplate measured at a predetermined time after the initial measured value, either the weight or the transparency, is obtained, and indicating that at least one nozzle in the plurality of nozzles is not discharging when a final measured value, either the weight or the transparency, is less than the initial measured value, either the weight or the transparency, plus any expected increase due to droplets ejected during the droplet ejection process between when the initial measured value, either the weight or the transparency, was obtained and when the final measured value, either the weight or the transparency, was obtained minus the expected reduction due to drying.

Preferably, the method further comprises: calculating a drying reduction curve as a function of time connecting the measured values at each of a plurality of set times from when the initial measured value is obtained.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a perspective view of a droplet dispensing apparatus according to a first embodiment.
FIG. 2 is a plan view of an upper surface a droplet ejecting apparatus.
FIG. 3 is a plan view of a lower surface of a droplet ejecting apparatus.
FIG. 4 is a cross-sectional view along line F4-F4 of FIG. 2.
FIG. 5 is a plan view of a droplet ejection array of a droplet ejecting apparatus.
FIG. 6 is a cross-sectional view along line F6-F6 of FIG. 5.
FIG. 7 is a schematic view of a non-discharge state detection unit of a droplet dispensing apparatus.
FIG. 8 is a diagram for explaining an ideal state in which there is no drying from a microplate in the droplet dispensing apparatus.
FIG. 9 is a diagram for explaining an actual measurement curve in a case where there is drying from the microplate.
FIG. 10 is a flowchart for explaining the operation of the non-discharge state detection unit of the droplet dispensing apparatus according to the first embodiment.
FIG. 11 is a schematic diagram of a non-discharge state detection unit of a droplet dispensing apparatus according to a second embodiment.
FIG. 12 is a diagram for explaining an ideal state in which there is no drying from a microplate of the droplet dispensing apparatus.
FIG. 13 is a flowchart for explaining the operation of the non-discharge state detection unit of the droplet dispensing apparatus according to the second embodiment.
FIG. 14 is a perspective view showing a droplet dispensing apparatus of a third embodiment.
FIG. 15 is a perspective view showing a droplet dispensing apparatus of a fourth embodiment.
FIG. 16 is a longitudinal sectional view showing a main part structure of a modification example of the microplate.

### DETAILED DESCRIPTION

In general, according to one embodiment, a droplet dispensing apparatus includes a droplet ejection array having a plurality of nozzles from which droplets can be ejected into a well opening of a microplate on a baseplate, a sensor configured to detect a liquid amount in the microplate, and a controller configured to detect that a nozzle in the plurality of nozzles is not discharging during a droplet ejection process based on an initial liquid amount in the microplate as detected by the sensor and a final liquid amount in the microplate as detected by the sensor during a droplet ejection process in which a predetermined number of droplets are to be ejected from the plurality of nozzles into the microplate.

Hereinafter, droplet dispensing apparatuses according to example embodiments will be described with reference to the drawings. It should be noted, that the particular embodiments explained below are some possible examples of a droplet dispensing apparatus according to the present disclosure and do not limit the possible configurations, specifications, or the like of droplet dispensing apparatuses according to the present disclosure.

### First embodiment

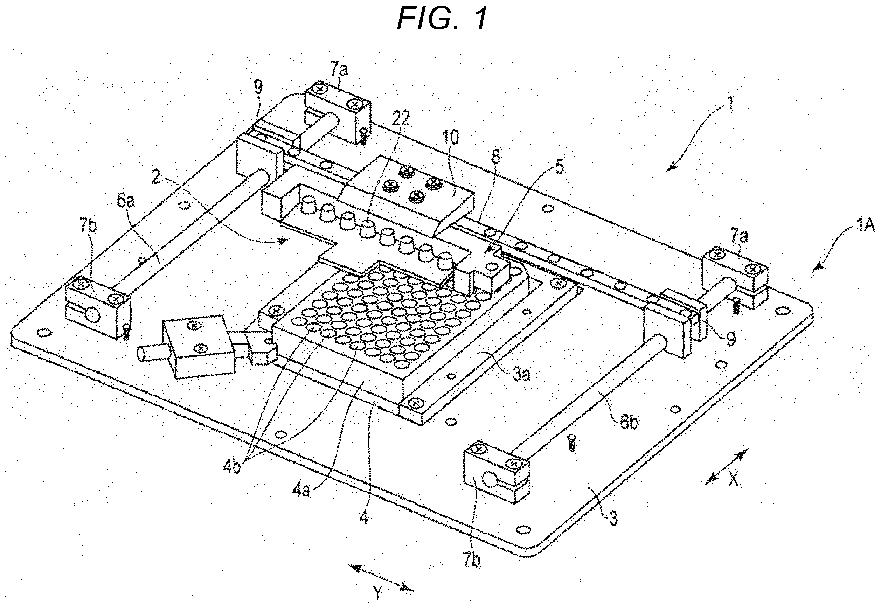

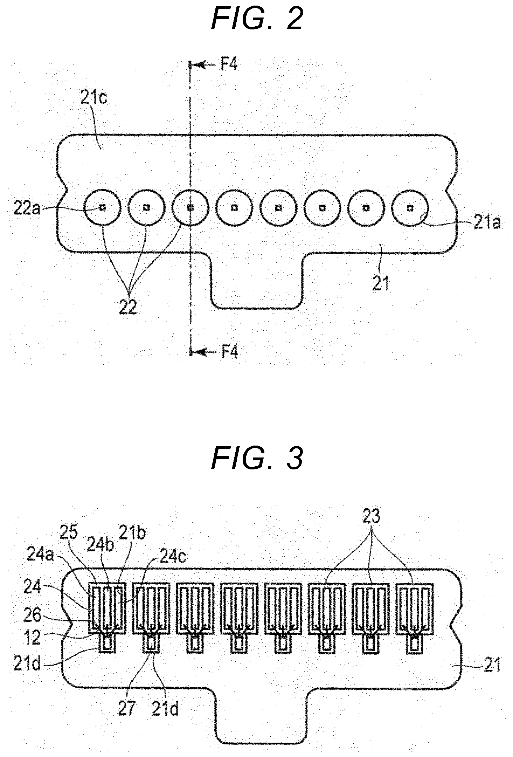

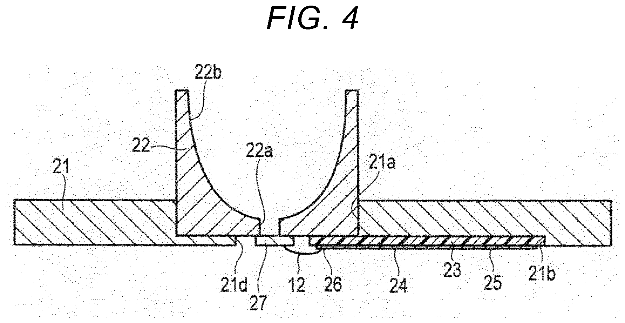

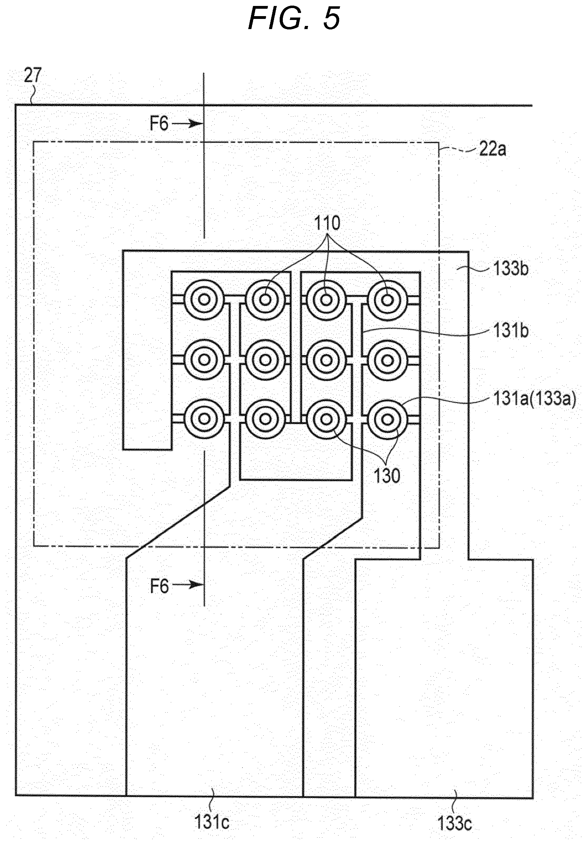

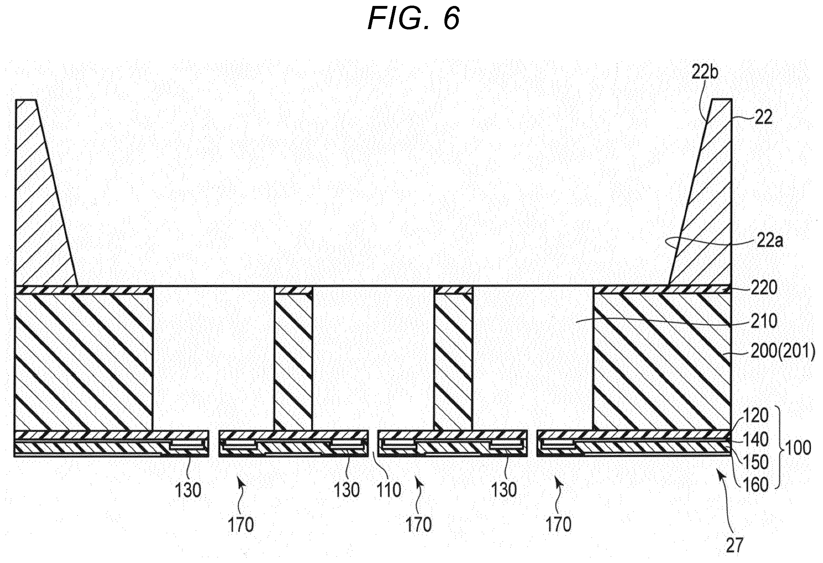

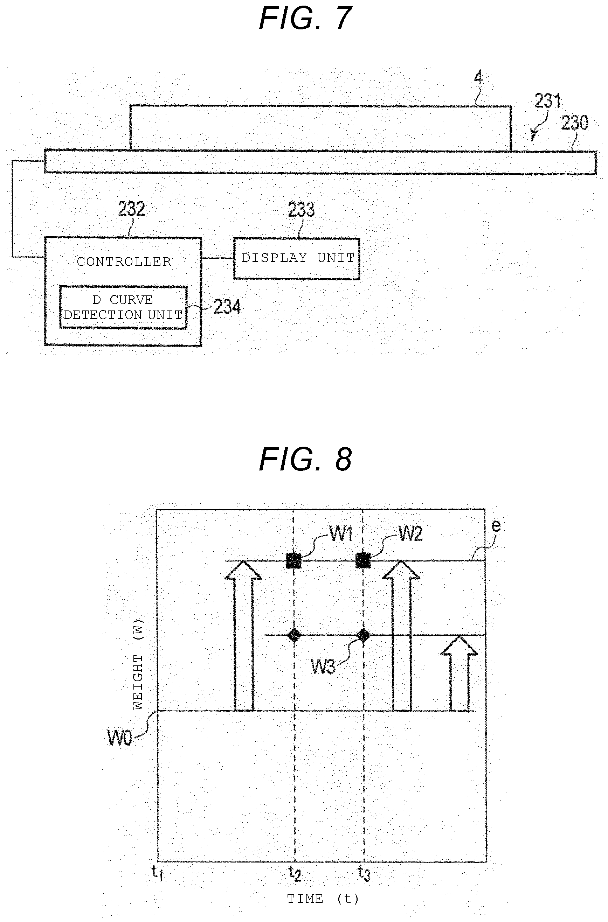

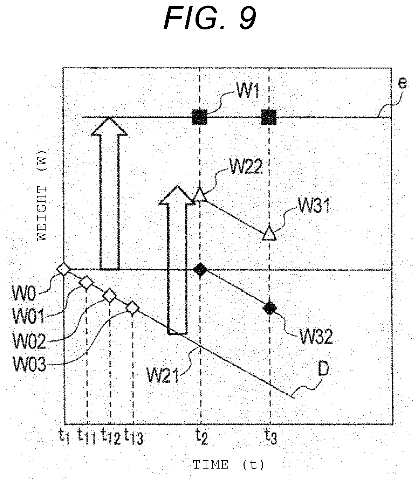

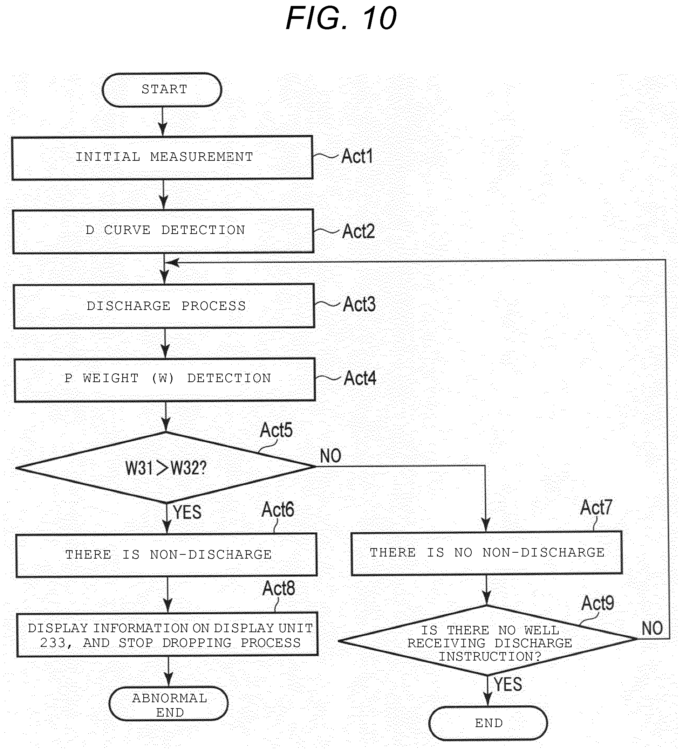

An example of a droplet dispensing apparatus 1 according to a first embodiment will be described with reference to FIG. 1 through FIG. 10. FIG. 1 is a perspective view of the droplet dispensing apparatus 1 according to the first embodiment. FIG. 2 is a plan view of an upper surface of a droplet ejecting apparatus 2 mounted on the droplet dispensing apparatus 1. FIG. 3 is a plan view of a lower surface from which a droplet from the droplet ejecting apparatus 2 is ejected. FIG. 4 is a cross-sectional view along line F4-F4 of FIG. 2. FIG. 5 is a plan view of a droplet ejection array 27 of the droplet ejecting apparatus 2. FIG. 6 is a cross-sectional view along line F6-F6 of FIG. 5. FIG. 7 is a schematic diagram of a non-discharge state detection unit of the droplet dispensing apparatus 1. FIG. 8 is a diagram for explaining an ideal state in which there is no drying from a microplate 4 in the droplet dispensing apparatus 1. FIG. 9 is a diagram for explaining an actual measurement curve in a case where there is drying from the microplate 4. FIG. 10 is a flowchart for explaining the operation of the non-discharge state detection unit of the droplet dispensing apparatus according to the first embodiment.

The droplet dispensing apparatus 1 includes a main body 1A having a rectangular flat baseplate 3 and a mounting module 5. In the example embodiment explained herein, a microplate 4, which may also be referred to as a receiving unit, a multiwell plate, or a microwell plate in some contexts, has 96 wells into which a solution can be dispensed. Microplates having 96 wells are commonly used in a biochemical research and clinical examination. However, the microplate 4 is not limited to having 96 wells and may have any other number of wells, such as 384 wells, 1536 wells, 3456 wells, or 6144 wells.

The microplate 4 is disposed at the center position of the baseplate 3 and can be secured to and detached from a plate attachment portion 3a of the baseplate 3. There are a pair of X-direction guide rails 6a and 6b extending on the baseplate 3 in a X-direction on both sides of the microplate 4. The ends of each of the X-direction guide rails 6a and 6b are fixed to fixing bases 7a and 7b protruding on the microplate 4.

A Y-direction guide rail 8 extending in a Y-direction is installed between the X-direction guide rails 6a and 6b. Both ends of the Y-direction guide rail 8 are fixed to X-direction moving bases 9 which can slide in the X-direction along the X-direction guide rails 6a and 6b, respectively.

In the Y-direction guide rail 8, a Y-direction moving base 10 is provided, on which the mounting module 5 is movable in the Y-direction along the Y-direction guide rail 8. The mounting module 5 is mounted on the Y-direction moving base 10. The droplet ejecting apparatus 2, which is a droplet ejecting unit, is fixed to the mounting module 5. Thus, the droplet ejecting apparatus 2 can move to any position in X and Y directions, which are orthogonal to each other in this instance, by the combination of a movement of the Y-direction moving base 10 along the Y-direction guide rail 8 in the Y-direction and a movement of the X-direction moving bases 9 along the X-direction guide rails 6a and 6b in the X-direction. In addition, the droplet ejecting apparatus 2 may be detached from and attached to the mounting module 5.

The droplet ejecting apparatus 2 according to the first embodiment has a flat base plate 21. As shown in FIG. 2, on a surface of the base plate 21 eight solution holding containers 22 are aligned in a row in the Y-direction. In some embodiments, the base plate 21 may have more or less than eight solution holding containers 22. The solution holding container 22 is a bottomed cylindrical container and an upper side is open as shown in FIG. 4. On the bottom surface of the base plate 21, a cylindrical recessed portion 21a is formed at a position corresponding to each solution holding container 22. The bottom of the solution holding container 22 is adhesively fixed to the recessed portion 21a. Further, at the bottom of the solution holding container 22, a solution outlet opening 22a (referred simply to as an opening hereinafter), through which is solution is ejected, is formed at the center position. An opening area of a top opening 22b of the solution holding container 22 is larger than an opening area of the opening 22a.

As shown in FIG. 3, an electrical mounting board 23 is provided at each of the solution holding containers 22 on the back side of the base plate 21. The electrical mounting board 23 is a rectangular flat plate. As shown in FIG. 4, a rectangular recessed portion 21b for mounting the electrical mounting board 23 and a droplet ejection opening 21d communicating with the recessed portion 21b are formed on the back side of the base plate 21. Circumference of the recessed portion 21b extends from the solution holding container 22 towards an end of the base plate 21 (an upper end in FIG. 3 and a right end in FIG. 3). As shown in FIG. 4, a portion of the recessed portion 21b overlaps with the solution holding container 22. The electrical mounting board 23 is adhesively fixed to the recessed portion 21b.

On the electrical mounting board 23, an electrical mounting board wiring 24 is patterned on the side opposite to the recessed portion 21b. Three wiring patterns 24a, 24b, and 24c respectively connected to a terminal portion 131c of a lower electrode 131 and two terminal portions 133c of an upper electrode 133 are formed in the electrical mounting board wiring 24.

An input signal control terminal 25 for receiving an external control signal is formed at one end of the electrical mounting board wiring 24. An electrode terminal connector 26 is provided at the other end of the electrical mounting board wiring 24. The electrode terminal connector 26 electrically connects the lower electrode terminal portion 131c and the upper electrode terminal portion 133c formed in the droplet ejection array 27 shown in FIG. 5.

In the base plate 21, the droplet ejection opening 21d is provided. As shown in FIG. 3, the droplet ejection opening 21d is a rectangular through-hole, and is formed at a position overlapping the recessed portion 21a on the back side of the base plate 21.

The droplet ejection array 27 shown in FIG. 5 is adhesively fixed to the lower surface of the solution holding container 22 so as to cover the opening 22a of the solution holding container 22. The droplet ejection array 27 is disposed at a position corresponding to the droplet ejection opening 21d of the base plate 21.

As shown in FIG. 6, the droplet ejection array 27 is formed by stacking a nozzle plate 100 and a pressure chamber structure 200. The nozzle plate 100 includes a nozzle 110 for discharging liquid, a diaphragm 120, a driving element 130, a protective film 150, and a liquid repelling film 160. An actuator 170 is formed with the diaphragm 120 and the driving element 130. In the example embodiment described herein, the actuator 170 may be a piezoelectric element made of a lead-free material containing no lead component, or a piezoelectric element made of lead-containing material.

As shown in FIG. 5, the droplet ejection array 27 has a nozzle group in which a plurality of nozzles is arranged in a X-Y plane that is parallel to the X-direction and the Y-direction. In the example described herein, three nozzles 110 are disposed in a vertical direction (also referred to as a first direction), four nozzles 110 are disposed in a horizontal direction (also referred to as a second direction), and one set of twelve nozzles 110 arranged in 3 × 4 rows and columns is defined as a nozzle group. That is, in the example embodiment described herein, as shown in FIG. 5, a plurality of nozzles 110 is disposed in each of the first direction and the second direction. The terminal portion 131c of the lower electrode 131 is spaced from the nozzle group in the first direction, and the terminal portion 131c and other terminal portions 131c for other nozzle groups are aligned in the second direction.

Furthermore, in the droplet ejection array 27 according to the present example embodiment, twelve nozzles in one nozzle group are disposed at a position corresponding to one opening 22a of one of the eight solution holding containers 22. The twelve nozzles 110 of one nozzle group are disposed only within one well opening 4b of the microplate 4.

The diaphragm 120 is formed integrally with the pressure chamber structure 200, for example. The driving element 130 is formed for each nozzle 110. The driving element 130 has an annular shape surrounding the nozzle 110. The shape of the driving element 130 is not limited, and may be, for example, a C-shape in which a part of a circular ring is cut out.

The diaphragm 120 deforms in the thickness direction by the action of the planar driving element 130. The droplet ejecting apparatus 2 discharges the solution supplied to the nozzle 110 due to the pressure change occurring in the pressure chamber 210 of the pressure chamber structure 200 caused by the deformation of the diaphragm 120.

The main body 1A of the droplet dispensing apparatus 1 includes a non-discharge state detection unit 231 shown in FIG. 7. The non-discharge state detection unit 231 includes a weight measuring device 230, which may be referred to as a scale, weight sensor, or simply a sensor, that measures the weight of the microplate 4, using a crystal oscillator, for example.

The weight measuring device 230 is connected to a controller 232, including a processor (not shown), which controls the operation of the droplet ejecting apparatus 2 or the overall operation of the droplet dispensing apparatus 1. Detection data from the weight measuring device 230 is input to the controller 232. A display unit 233 such as a monitor, for example, is connected to the controller 232, and a D curve detection unit 234 that detects a drying reduction curve D, which corresponds to a drying reduction as a function of time, is built therein.

The controller 232 detects a weight reduction of the droplet due to drying, which corresponds to a correction value in reference to a drying reduction curve D to an initial measured value of the weight (w) of the microplate 4. The weight measuring device 230 measures an initial weight of the microplate 4 at a beginning of a dropping process and a final weight (w) of the microplate 4 after droplets are dropped on the microplate 4 for a predetermined time, and displays the measured initial weight and the final weight (w) on the display unit 233 as necessary. The controller 232 determines that some of the nozzles 110 in the nozzle group are not discharging, when a difference between the measured final weight (w) and the measured initial weight of the microplate 4 is smaller than an expected weight reduction of the droplets due to drying during the droplet dropping process. When it is determined that some of the nozzles 110 are not discharging, the controller 232 displays information of the droplet dispensing apparatus 1 on the display unit 233 such as a monitor, and abort further droplet dropping processing. When the controller 232 does not detect any nozzle 110 that is not discharging, the controller 232 continues further droplet dropping processing until a predetermined number of droplets are dropped into all wells.

In the droplet dispensing apparatus 1 according to the first embodiment, the droplet ejecting apparatus 2 is mounted on the mounting module 5. When the droplet ejecting apparatus 2 is in use, a predetermined amount of solution is supplied to the solution holding container 22 from the top opening 22b of the solution holding container 22 by a pipette or the like (not shown). The solution is held on the inner surface of the solution holding container 22. The opening 22a at the bottom of the solution holding container 22 communicates with the droplet ejection array 27. The solution held in the solution holding container 22 flows into each pressure chamber 210 of the droplet ejection array 27 through the opening 22a.

A voltage control signal that is input to the input signal control terminal 25 is transmitted from the electrode terminal connector 26 to the terminal portion 131c of the lower electrode 131 and the terminal portion 133c of the upper electrode 133. In response to the voltage control signal applied to the driving element 130, the diaphragm 120 is deformed to change the volume of the pressure chamber 210, and thus the solution is discharged as solution droplets from the nozzle 110 of the droplet ejection array 27. In the example embodiment described herein, solution droplets are simultaneously dropped from the twelve nozzles 110 to one well opening 4b of the microplate 4. A predetermined amount of liquid is dropped to each well opening 4b of the microplate 4 from the nozzle 110.

An amount of liquid that is dropped is controlled by a number of repetitions of one-droplet dropping from each nozzle 110, and thus it is possible to control dropping of a liquid to each well opening 4b in the order of picoliter (pL) to microliter (µL).

In the present embodiment, the controller 232 performs the control of the non-discharge state detection unit 231 shown in the flowchart of FIG. 10. First, when a start button (not shown) or the like of the droplet dispensing apparatus 1 is pressed, the controller 232 performs an initial measurement control (Act1). In the initial measurement control, shown in FIG. 8, an initial weight w0 of a microplate 4 is measured at a time t1 immediately after a first dropping operation starts. The controller 232 acquires the initial weight w0 of the microplate 4 measured by the weight measuring device 230 at time t1.

Thereafter, the controller 232 performs a second dropping operation control at a time t2. In FIG. 9, a solid line e indicates the expected weight w1 of the microplate 4 after a predetermined number of droplets are dropped.

Thereafter, at a time t3 a predetermined time after time t2, the weight measuring device 230 measures a final weight w2 of the microplate 4, and the controller 232 acquires the measured final weight w2. If w 2 = w 1, the controller 232 determines that all nozzles 110 in the nozzle group are discharging as intended. When the final weight measured at time t3 is w3, which is smaller than w1 (w3 < w1), the controller 232 determines that some of the nozzles 110 in the nozzle group are not discharging as intended. FIG. 8 depicts weights of the microplate 4 at times t1, t2, and t3 without a liquid reduction due to drying.

FIG. 9 depicts time variation of the weight of the microplate 4 in consideration of the liquid reduction due to drying after a predetermined time from the initial measurement time at t1. In the initial measurement, as shown in FIG. 9, the controller 232 performs first dropping operation control at the time t1 immediately after the first dropping operation starts. The controller 232 acquires the initial weight w0 of the microplate 4 measured by the weight measuring device 230.

Thereafter, the controller 232 detects a liquid reduction caused by drying of the microplate 4, before the second dropping operation starts at a time t2 (Act2). Here, the controller 232 acquires weights w (w01, w02, w03 ...) of the microplate 4 at each of a plurality of set times (t11, t12, t13 ...) from the initial measurement time t1. Then, the controller 232 calculates a characteristic curve connecting w0, w01, w02, w03 ..., and defines the characteristic curve as a drying reduction curve D.

In Act2, after detecting the drying reduction curve D, the controller 232 proceeds to the discharge process in Act3. In the discharge process of Act3, the controller 232 performs the second dropping operation control at time t2 in FIG. 9. In FIG. 9, the solid line e indicates the expected weight w1 of the microplate 4 after a predetermined number of droplets are dropped. During the second dropping operation, the weight w of the microplate 4 decreases due to drying. Therefore, at the time of the second dropping operation, the weight of the liquid in the microplate 4 is w21 < w0 (w01, w02, and w03). The weight w21 is determined along the drying reduction curve D. Then, the controller 232 performs the second dropping operation control for the microplate 4 having the weight w21. Therefore, the controller 232 predicts or estimates that the weight w22 after the expected weight reduction due to drying at time point t2 will be less than w1.

Thereafter, at time t3 a predetermined time after time t2, the weight measuring device 230 measures a final weight w31 of the microplate 4, and the controller 232 acquires this the measured final weight w31 (Act4). In Act5, the controller 232 determines whether or not w31 is equal to the predicted weight determined by reference to the drying reduction curve D. When the measured final weight w32 is smaller than the predicted weight w31 determined in reference to the drying reduction curve D (w31 > w32) at time t3, the controller 232 determines that some of the nozzles 110 in the nozzle group are not discharging as intended (Act6). If the W31 is equal to the predicted weight determined in reference to the drying reduction curve D, the controller 232 determines that all nozzles 110 in the nozzle group are discharging as intended (Act7). After Act6, the controller 232 proceeds to Act8, displays information indicating a non-discharge state, for example, "Error/Stop" on the display unit 233, and aborts further droplet dropping processes. After Act7, the controller 232 proceeds to Act9 and continues further droplet dropping processes until a predetermined number of droplets are dropped to all wells (Act3). When it is confirmed that the predetermined number of droplets has been dropped to all wells (Act10), the controller 232 completes the process.

In the droplet dispensing apparatus 1 according to the first embodiment, a non-discharge state detection unit 231 is driven at the time of a dropping operation. The controller 232, by the non-discharge state detection unit 231, detects weight reduction of droplets due to drying based on an initial weight of the microplate 4 measured by the weight measuring device 230. During a droplet dropping process, when the weight (w) of the microplate 4 measured by the weight measuring device 230 is smaller than a predicted weight of the microplate 4 after an expected weight reduction due to drying of droplets, which corresponds to a correction value in reference to the drying reduction curve D, the controller 232 determines that some of the nozzle 110 in the nozzle group are not charging as intended. Thus, the controller 232 can detect a discharge failure in which some of the nozzles 110 in a nozzle group are not discharging during a dropping process. As a result, liquid is dropped simultaneously from twelve nozzles 110 in one nozzle group into a well opening 4b of the microplate 4, the controller 232 can detect a discharge failure, such as clogging, in which some of the nozzles 110 in the nozzle group are not discharging as intended.

When a discharge failure is detected, and thus a predetermined amount of liquid cannot be dropped from the droplet ejection array 27 into the well openings 4b of the microplate 4, the controller 232 can quickly stop further solution dropping from the nozzle 110. Thus, the controller 232 can stop the dropping of liquid at an early stage when a discharge failure occurs, which contributes to reduction of waste in a dose-response or the like, and early error detection in an evaluation results of drug performance. As a result, it is possible to provide a droplet dispensing apparatus which can provide more accurate evaluation results of drug performance or the like.

A piezoelectric element may be made of a lead-free material that has lower piezoelectric characteristics than a piezoelectric element including a lead component, for example, PZT (Pb(Zr, Ti)O₃: lead titanate zirconate). Therefore, in the case of the piezoelectric element made of a lead-free material, the amount of displacement of the diaphragm 120 during driving is smaller than that of the piezoelectric element made of PZT, so that the amount of liquid per drop is small.

In the example embodiment described herein, a plurality of nozzles 110 (12 nozzles arranged in 3 × 4 rows and columns) in one nozzle group for one well opening 4b is provided. Thus, even with a lead-free piezoelectric element having low piezoelectric characteristics, it is possible to speed-up the dropping of the required amount of liquid. Therefore, it is possible to complete the dropping of the necessary amount of the liquid in a short time to all the well openings 4b of the microplate 4.

### Second Embodiment

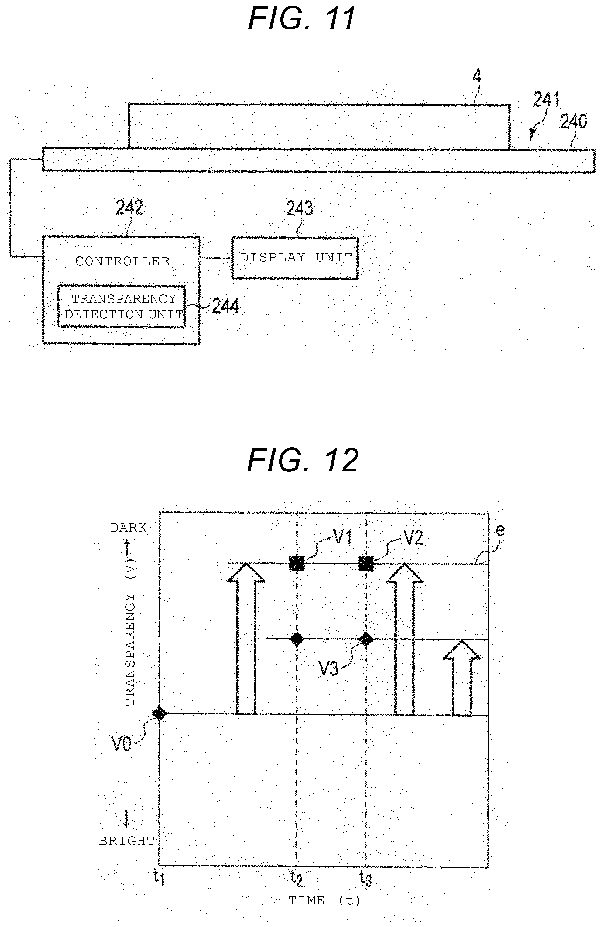

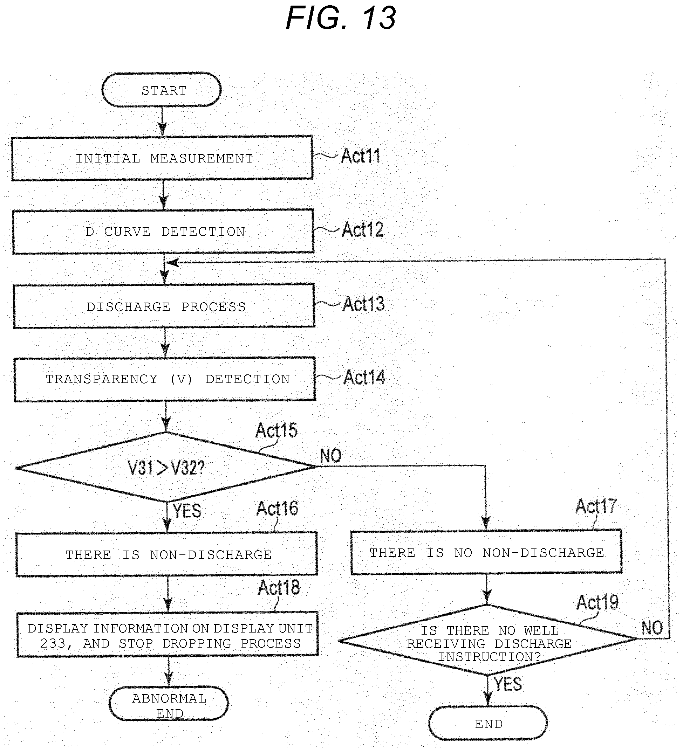

FIG. 11 is a schematic diagram of a non-discharge state detection unit of a droplet dispensing apparatus according to a second embodiment. FIG. 12 is a diagram for explaining an ideal state in which there is no drying from a microplate of the droplet dispensing apparatus. FIG. 13 is a flowchart for explaining the operation of the non-discharge state detection unit of the droplet dispensing apparatus according to the second embodiment.

In this example embodiment, the non-discharge state detection unit 231 of the droplet dispensing apparatus 1 according to the first embodiment is modified as follows. The same reference numerals are used for the components that are substantially the same as those of the first embodiment, and the detailed description of repeated components may be omitted.

In the first embodiment, the non-discharge state detection unit 231 detects a discharge failure by measuring of a microplate 4 by the weight measuring device 230. In the second embodiment, a non-discharge state detection unit 241 includes a scanner 240, which may be referred to as a transparency sensor or simply a sensor, that detects the presence or absence of droplets discharged from the nozzles 110 in the nozzle group based on the measured or otherwise detected transparency of the microplate 4. The scanner 240 is formed of, for example, a CMOS sensor.

The scanner 240 is connected to a controller 242 which controls the operation of the droplet ejecting apparatus 2 or the overall operation of the droplet dispensing apparatus 1. The detection data from the scanner 240 is input to the controller 242. A display unit 243 such as a monitor is connected to the controller 242, and a transparency detection unit 244 that measures the transparency of the microplate 4 is built therein.

The controller 242 detects a decrease or otherwise a change in transparency (v) of droplets due to drying from the initial transparency (v) of the microplate 4. The scanner 240 measures initial transparency of the microplate 4 at a beginning of a dropping process and a final transparency (v) of the microplate 4 after droplets are dropped on the microplate 4 and the measured transparency (v) of the microplate 4 for a predetermined time, and displays the measured initial transparency and the final transparency (v) on the display unit 243 as necessary. The controller 242 determines that some of the nozzles 110 in the nozzle group are not discharging, when a difference between the measured final transparency (v) and the measured initial transparency of the microplate 4 is smaller than an expected transparency reduction of the droplets due to drying during the droplet dropping process. When it is determined that some of the nozzle 110 are not discharging, the controller 242 displays information of the droplet dispensing apparatus 1 on the display unit 233 such as a monitor, and abort further droplet dropping processing. When the controller 242 does not detect any nozzle 110 that is not discharging, the controller 242 continues further droplet dropping processing.

In the present embodiment, the controller 242 performs the control of the non-discharge state detection unit 241 shown in the flowchart of FIG. 13. First, when a start button or the like of the droplet dispensing apparatus 1 is pressed, the controller 242 performs initial measurement control (Act11). In the initial measurement control, shown in FIG. 12, an initial transparency of a microplate 4 is measured at a time t1 immediately after a first dropping operation starts. After the first dropping operation has been completed, the controller 242 acquires the final transparency v0 of the microplate 4 measured by the scanner 240.

Thereafter, the controller 242 performs a second dropping operation control at a time t2. In FIG. 12, the solid line e indicates the predicted transparency v1 of the microplate 4 after expected transparency reduction due to drying.

Thereafter, at a time t3 a predetermined time after time t2, the controller 242 acquires transparency v2 of the microplate 4 measured by the scanner 240. If v2 = v1, the controller 242 determines that the nozzle 110 of the nozzle group is in a successful state where there is no non-discharge. In addition, at the time point t3, in a case where the measured transparency v3 is smaller than v1 (v3 < v1), the controller 242 determines that any one of the nozzles 110 in the nozzle group is in a non-discharge state. In addition, FIG. 12 shows an ideal curve without consideration of the liquid reduction amount due to drying of the microplate 4.

On the other hand, the actual curve in consideration of the liquid reduction amount due to the dry state of the microplate 4 after a lapse of a predetermined time from the above initial measurement time shows characteristics similar to those in the first embodiment. That is, in the initial measurement control, shown in FIG. 12, an initial transparency v0 of a microplate 4 is measured at a time t1 immediately after a first dropping operation starts. The controller 242 acquires the final transparency (v) of the microplate 4 measured by the scanner 240.

Thereafter, the controller 242 detects a liquid reduction caused by drying of the microplate 4, before the second dropping operation starts at a time t2 (Act12). Here, the controller 242 acquires transparencies (v) of the microplate 4 at a plurality of set times (t11, t12, t13 ...) from the initial measurement time t1 at which the scanner 240 performs the initial transparency measurement. Then, the controller 242 calculates a characteristic curve connecting the transparencies (v) measured at the plurality of set times, and defines the characteristic curve as a drying reduction curve D.

In Act12 in the flowchart of FIG. 13, after detecting the drying reduction curve D, the controller 242 proceeds to the discharge process in Act13. In the discharge process of Act13, the controller 242 performs the second dropping operation control at time t2 in FIG. 12. In FIG. 12, the solid line e indicates the expected transparency (v) of the microplate 4 after a predetermined number of droplets are dropped. During the second dropping operation, the transparency (v) of the microplate 4 decreases due to drying. At this time, the transparency (v) is determined along the drying reduction curve D. Then, the controller 242 performs the second dropping operation control for the microplate 4 having the transparency (v). Therefore, the controller 242 predicts that the transparency v22 of the microplate 4 at time t2 is less than v1.

Thereafter, at time t3 a predetermined time after time t2, the controller 242 acquires the final transparency v31 of the microplate 4 measured by the scanner 240 (Act14). In Act15, the controller 242 determines whether or not v31 is equal to the predicted transparency determined in reference to the drying reduction curve D. When the measured final transparency v32 is smaller than the predicted transparency v31 determined in reference to the drying reduction curve D (v31 > v32), the controller 242 determines that some of the nozzles 110 in the nozzle group are not discharging as intended (Act16). If the v31 is equal to the predicted transparency determined in reference the drying reduction curve D, the controller 242 determines that all nozzles 110 in the nozzle group are charging as intended (Act17). After Act16, the controller 242 proceeds to Act18, displays information indicating a non-discharge state, for example, "Error/Stop" on the display unit 233, and aborts further droplet dropping processes. After Act17, the controller 242 proceeds to Act19 and continues further droplet dropping processes until a predetermined number of droplets are dropped to all wells (Act13). When it is confirmed that the predetermined number of droplets has been dropped to all wells (Act10), the controller 242 completes the process.

In the droplet dispensing apparatus 1 according to the second embodiment, the controller 242 acquires weight reduction of droplets due drying based on an initial transparency (v) of the microplate 4 measured by the scanner 240. The controller 242 determines that some of the nozzles 110 in the nozzle group are not discharging as intended, when the transparency (v) of the microplate 4 measured by the scanner 240 is smaller than a predicted transparency (v) of the microplate 4 after an expected transparency reduction due to drying of droplets, which corresponds to a correction value in reference to the drying reduction curve D), during a droplet dropping process. Thus, the controller 242 can detect a discharge failure in which some of the nozzles 110 in a nozzle group are not discharging during a dropping process.

As a result, also in the second embodiment, in the same way as in the first embodiment, liquid is dropped simultaneously from twelve nozzles 110s in one nozzle group into a well opening 4b of the microplate 4, the controller 242 can detect a discharge failure, such as clogging, in which some of the nozzles 110 in the nozzle group are not discharging as intended. When a discharge failure is detected and thus a predetermined amount of liquid cannot be dropped from the droplet ejection array 27 into the well openings 4b of the microplate 4, the controller 242 can quickly stop further solution dropping from the nozzle 110. Thus, the controller 242 can stop the dropping of liquid at an early stage when a discharge failure occurs, which contributes to reduction of waste in a dose-response or the like, and early error detection in an evaluation results of drug performance. As a result, it is possible to provide a droplet dispensing apparatus which can provide more accurate evaluation results of drug performance. Furthermore, in the second embodiment, since the scanner 240 measures the transparency (v) of the microplate 4 by, the controller 242 can detect a discharge failure in individual nozzles 110 for each well-opening 4b of the microplate 4. Therefore, it is possible to more accurately detect a discharge failure in specific nozzles 110 in one nozzle group are not discharging.

### Third embodiment

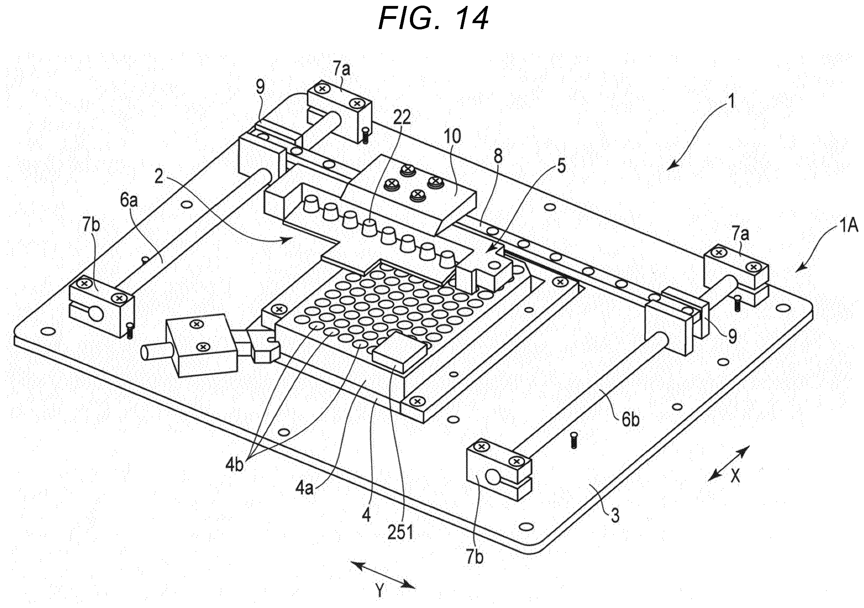

FIG. 14 is a perspective view of a non-discharge state detection unit of a droplet dispensing apparatus according to a third embodiment. In this example embodiment, the droplet dispensing apparatus 1 according to the first embodiment is modified. The same reference numerals are used for the components that are substantially the same as those of the first embodiment, and the detailed description of repeated components may be omitted.

In the third embodiment, a second droplet ejecting unit 251 in addition to the droplet ejection array 27 is provided. The second droplet ejecting unit 251 includes a support mechanism (not specifically depicted) which supports the droplet ejecting apparatus 2 so as to be movable to an arbitrary position in the X-Y direction separately from the droplet ejecting apparatus 2.

The second droplet ejecting unit 251 includes, for example, a water tank (not specifically depicted). The second droplet ejecting unit 251 may further include a tank that contains the same liquid as that of the droplet ejection array 27.

In the third embodiment, after a predetermined amount of liquid has been dropped from the droplet ejection array 27 into each well opening 4b of the microplate 4, after a preset set time elapses, a solution (e.g., water) is additionally discharged from the second droplet ejecting unit 251 to each well opening 4b of the microplate 4. This makes it possible to prevent the drying of the cells contained in each well opening 4b of the microplate 4, in a case where the liquid contained in each well opening 4b of the microplate 4 may dry when in contact with air.

For example, in a high density microplate, there is a possibility that cells dry due to liquid evaporation during dropping, due to an increase in dropping time and a decrease in liquid amount due to an increase in the number of wells. In such a case, it is possible to effectively suppress errors due to drying of the cells contained in each well opening 4b of the microplate 4, by dispensing an additional solution from the second droplet ejecting unit 251. This enables high efficiency experimentation using the high density microplate.

Furthermore, the support mechanism of the second droplet ejecting unit 251 may be able to perform a parallel process of dispensing a droplet in parallel with or perpendicular to the droplet ejection array 27.

### Fourth embodiment

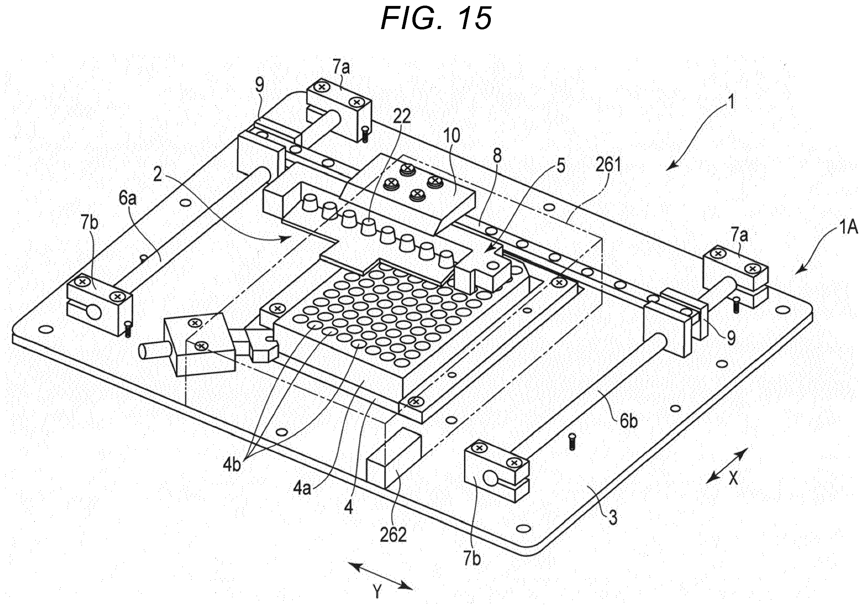

FIG. 15 is a perspective view of is a perspective view of a non-discharge state detection unit of a droplet dispensing apparatus according to a fourth embodiment. In this example embodiment, the droplet dispensing apparatus 1 according to the first embodiment is modified. The same reference numerals are used for the components that are substantially the same as those of the first embodiment, and the detailed description of repeated components may be omitted.

In the fourth embodiment, a sealed box component 261 that encloses the microplate 4 and a spraying device 262 spraying a humidifying solution within the sealed box component 261 are provided on the baseplate 3. The sealed box component 261 includes, for example, a frame portion having a highly rigid frame structure and a cover made of an elastic material for closing a space between the frame portions of each frame. The inside of the sealed box component 261 can be hermetically sealed by the frame portion and the cover.

The spraying device 262 includes, for example, a water tank (not specifically depicted). The spraying device 262 may further include a tank that contains the same liquid as that of the liquid ejection array 27. The spraying device 262 is provided in the sealed box component 261, and sprays a drying prevention liquid inside of the sealed box component 261 for drying prevention.

In the fourth embodiment, after a predetermined amount of liquid has been dropped from the droplet ejection array 27 into each well opening 4b of the microplate 4, after a preset set time elapses, droplets for preventing drying are sprayed from the spraying device 262 inside of the sealed box component 261. The spraying device 262 may also be configured such that droplets for drying prevention are sprayed simultaneously with the start of the liquid dropping operation from the droplet ejection array 27.

This makes it possible to prevent the drying of the cells contained in each well opening 4b of the microplate 4, in a case where the liquid contained in each well opening 4b of the microplate 4 dries when in contact with air.

### Fifth embodiment

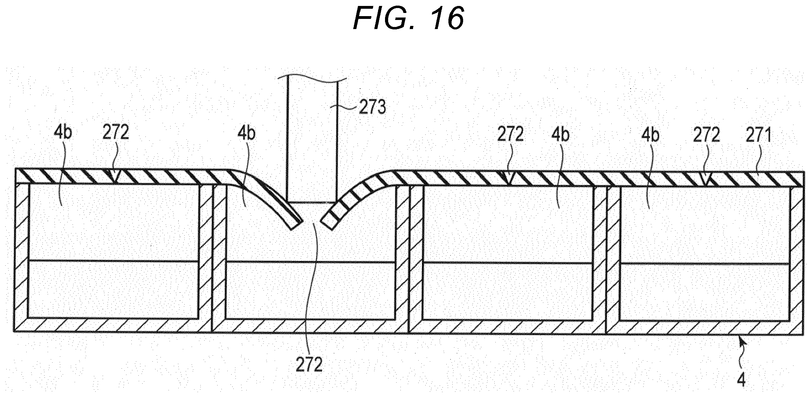

FIG. 16 is a longitudinal cross-sectional view of a microplate 4 according to a fifth embodiment. In the microplate 4 in the present modification example, a lid member 271 made of an elastic material, such as rubber, is provided on the periphery of the opening of the well opening 4b. In the lid 271, a notch 272 such as a slit is formed at the center position of the opening of the well opening 4b.

A needle-like injection member 273 is provided with the droplet ejection array 27. At the tip end of the injection member 273, there is provided an actuator capable of injecting droplets of a pL order.

In the microplate 4 as modified, the opening of the well opening 4b is blocked by the lid 271 in the standby state (when not in use). In this state, the notch 272 of the lid 271 is closed.

At the time of an operation for dispensing liquid from the droplet ejection array 27 as shown in FIG. 16, the tip end of the injection member 273 is press-fitted into the notch 272 of the lid 271. Thus, the tip end of the injection member 273 opens the notch 272 of the lid member 271. At this time, the lid 271 elastically deforms to a state in which the peripheral portions on both sides of the notch 272 are pushed into the inside of the well opening 4b. Therefore, when the tip end of the injection member 273 is inserted to the inside of the well opening 4b, droplets are discharged from the tip end of the injection member 273.

When a specified number of droplets are discharged from the injection member 273, the injection member 273 is drawn out of the microplate 4. At this time, the lid 271 elastically returns to a state in which the peripheral portions on both sides of the notch 272 are closed. Therefore, the well opening 4b of the microplate 4 is closed by the lid 271. As a result, the inner space of the well opening 4b of the microplate 4 is maintained in an airtight state by the lid 271, so that evaporation of the droplet injected into the internal space of the well opening 4b of the microplate 4 is prevented.

As a result, it is possible to prevent the liquid contained in each well opening 4b of the microplate 4 from touching the outside air and drying, and to prevent the drying of the cells contained in each well opening 4b of the microplate 4.

While certain embodiments have been described, these embodiments have been presented by way of example only, and are not intended to limit the scope of the invention which is defined by the accompanying claims.

## Claims

1. A droplet dispensing apparatus (1) comprising:
a droplet ejection array (27) having a plurality of nozzles (110) from which droplets can be ejected into a well opening (4b) of a microplate (4) on a baseplate (3);
a sensor (230, 240) configured to measure a value for detecting a liquid amount in the microplate (4); the sensor being one of a weight measuring device (230) that measures a weight of the microplate (4) and a transparency sensor (240) that detects a presence or absence of droplets discharged from the nozzle (110) in the plurality of nozzles (110) based on a measured or otherwise detected transparency of the microplate (4); and
a controller (232, 242) configured to detect that a nozzle in the plurality of nozzles (110) is not discharging during a droplet ejection process based on an initial liquid amount in the microplate (4) as detected by either the weight measuring device (230) or the transparency sensor (240) and a final liquid amount in the microplate (4) as detected by either the weight measuring device (230) or the transparency sensor (240) during a droplet ejection process in which a predetermined number of droplets are to be ejected from the plurality of nozzles (110) into the microplate (4),
**characterized in that** the controller (232, 242) is further configured to:
calculate an expected reduction due to drying during the droplet ejection process based on an initial measured value of the microplate (4) by either the weight measuring device (230) or the transparency sensor (240) and a reference measured value of the microplate (4) by either the weight measuring device (230) or the transparency sensor (240) after a lapse of a predetermined time from when the initial measured value is obtained; and
signal that at least one nozzle in the plurality of nozzles (110) is not discharging when a final measured value is less than the initial measured value plus any expected increase due to droplets ejected during the droplet ejection process between when the initial measured value was obtained and when the final measured value was obtained minus the expected reduction due to drying.

2. The droplet dispensing apparatus according to claim 1, wherein the controller (232, 242) is further configured to calculate a drying reduction curve (D) as a function of time connecting the measured values by either the weight measuring device (230) or the transparency sensor (240) at each of a plurality of set times from when the initial measured value is obtained.

3. The droplet dispensing apparatus according to claim 1 or 2, further comprising a droplet ejection unit (251) in addition to the droplet ejection array (27) configured to dispense liquid towards the microplate (4) on the baseplate (3).

4. The droplet dispensing apparatus according to any one of claims 1 to 3, further comprising:
a sealed box (261) enclosing the droplet ejection array (27) and at least a portion of the baseplate (3); and
a spraying device (262) configured to spray a liquid into the sealed box (261).

5. The droplet dispensing apparatus according to any one of claims 1 to 4, further comprising a needle-like ejection member (273) on the droplet ejection array (27) configured to engage and open a lid (271) on a periphery of a well opening (4b) of the microplate (4).

6. The droplet dispensing apparatus according to any one of claims 1 to 5, further comprising a movement mechanism (9, 10) attached to the baseplate (3) and the droplet ejection array (27) and configured to move the droplet ejection array (27) such that droplets can be ejected into each well opening (4b) of the microplate (4).

7. The droplet dispensing apparatus according to any one of claims 1 to 6, further comprising:
a board (21) having a first surface and a second surface, wherein the droplets can be ejected via the second surface of the board (21);
a plurality of pressure chambers (210) on the second surface of the board, each pressure chamber in the plurality being fluidly connected to a respective nozzle in the plurality of nozzles;
a plurality of actuators (170) that changes a pressure in a respective pressure chamber and causes liquid to be discharged from the respective nozzle; and
a plurality of solution holding containers (22) on the second surface of the board (21), each having a solution receiving port (22b) for receiving liquid and a solution outlet (22a) for supplying liquid with a respective pressure chamber.

8. The droplet dispensing apparatus according to any one of claims 1 to 7, further comprising a display unit (233) to display information of the droplet dispensing apparatus (1).

9. An analytic system comprising the droplet dispensing apparatus according to any one of claims 1 to 8.

10. A method for operating a droplet dispensing apparatus (1) comprising a droplet ejection array (27) having a plurality of nozzles (110) from which droplets can be ejected into a well opening (4b) of a microplate (4) on a baseplate (3), the method comprising:
measuring a value for detecting a liquid amount in the microplate (4); the value being one of a weight of the microplate (4) and a transparency of the microplate (4) and
determining that a nozzle in the plurality of nozzles (110) is not discharging during a droplet ejection process based on an initial liquid amount and a final liquid amount in the microplate (4) as detected during a droplet ejection process in which a predetermined number of droplets are to be ejected from the plurality of nozzles (110) into the microplate (4),
**characterized in that** the method further comprises:
calculating an expected reduction due to drying during the droplet ejection process based on an initial measured value, either the weight or the transparency, of the microplate (4) and a reference measured value, either the weight or the transparency, of the microplate (4) measured at a predetermined time after the initial measured value, either the weight or the transparency, is obtained, and
indicating that at least one nozzle in the plurality of nozzles (110) is not discharging when a final measured value, either the weight or the transparency, is less than the initial measured value, either the weight or the transparency, plus any expected increase due to droplets ejected during the droplet ejection process between when the initial measured value, either the weight or the transparency, was obtained and when the final measured value, either the weight or the transparency, was obtained minus the expected reduction due to drying.

11. The method according to claim 10, further comprising:
calculating a drying reduction curve (D) as a function of time connecting the measured values at each of a plurality of set times from when the initial measured value is obtained.

## Patentansprüche

1. Tröpfchenausgabevorrichtung (1), umfassend:
eine Tröpfchenausstoßanordnung (27) mit einer Vielzahl von Düsen (110), aus denen Tröpfchen in eine Vertiefungsöffnung (4b) einer Mikroplatte (4) auf einer Basisplatte (3) ausgestoßen werden können;
einen Sensor (230, 240) der konfiguriert ist, um einen Wert zum Nachweis einer Flüssigkeitsmenge in einer Mikroplatte (4) zu messen; wobei der Sensor einer einer Gewichtsmessvorrichtung (230) ist, die ein Gewicht der Mikroplatte (4) misst, und eines Transparenzsensors (240), der eine Anwesenheit oder Abwesenheit von Tröpfchen nachweist, die aus der Düse (110) in der Vielzahl von Düsen (110) entladen werden, basierend auf der gemessenen oder anderweitig nachgwiesenen Transparenz der Mikroplatte (4); und
eine Steuervorrichtung (232, 242), die konfiguriert ist, um nachzuweisen, dass eine Düse in der Vielzahl von Düsen (110) während eines Tröpfchenausstoßverfahrens basierend auf einer anfänglichen Flüssigkeitsmenge der Mikroplatte (4), wie nachgewiesen von entweder der Gewichtsmessvorrichtung (230) oder dem Transparenzsensor (240), und einer endgültigen Flüssigkeitsmenge in der Mikroplatte (4), wie nachgewiesen von entweder der Gewichtsmessvorrichtung (230) und dem Transparenzsensor (240), während eines Tröpfchenausstoßverfahrens, in dem eine vorbestimmte Anzahl von Tröpfchen aus der Vielzahl von Düsen (110) in die Mikroplatte (4) ausgestoßen werden sollen, nicht entlädt,
**dadurch gekennzeichnet, dass** die Steuervorrichtung (232, 242) weiter konfiguriert ist, um:
eine erwartete Reduktion aufgrund des Trocknens während eines Tröpfchenausstoßverfahrens basierend auf einen anfänglich gemessenen Wert der Mikroplatte (4) von entweder der Gewichtsmessvorrichtung (230) oder dem Transparenzsensor (240), und einem gemessenen Referenzwert der Mikroplatte (4) von entweder der Gewichtsmessvorrichtung (230) und dem Transparenzsensor (240), nach dem Ablauf einer vorbestimmten Zeit ab dem Zeitpunkt, an dem der gemessene Wert erhalten wird, zu berechnen; und
zu signalisieren, dass mindestens eine Düse in der Vielzahl von Düsen (110) nicht entlädt, wenn ein endgültiger gemessener Wert weniger als der anfänglich gemessene Wert plus jede erwartete Erhöhung aufgrund von Tröpfchen ist, die während eines Tröpfchenausstoßverfahrens zwischen dem Zeitpunkt, an dem der anfänglich gemessene Wert erhalten wurde, und dem Zeitpunkt, an dem der endgültige gemessene Wert erhalten wurde, minus der erwarteten Reduktion durch Trocknen ausgestoßen wurden.

2. Tröpfchenausgabevorrichtung nach Anspruch 1, wobei die Steuervorrichtung (232, 242) weiter konfiguriert ist, um eine Trockungsreduktionskurve (D) als eine Funktion der Zeit zu berechnen, die die gemessenen Werte von entweder der Gewichtsmessvorrichtung (230) oder dem Transparenzsensor (240) an jeder einer Vielzahl von eingestellten Zeiten ab dem Zeitpunkt, an dem der gemessene Wert erhalten wird, verbinden.

3. Tröpfchenausgabevorrichtung nach Anspruch 1 oder 2, weiter umfassend eine Tröpfchenausstoßeinheit (251) zusätzlich zur Tröpfchenausstoßanordnung (27), die konfiguriert ist, um Flüssgigkeit hin zur Mikroplatte (4) auf der Basisplatte (3) auszugeben.

4. Tröpfchenausgabevorrichtung nach einem der Ansprüche 1 bis 3, weiter umfassend
eine versiegelte Box (261), die die Tröpfchenausstoßanordnung (27) und mindestens einen Abschnitt der Basisplatte (3) einschließt; und
eine Sprühvorrichtung (262), die konfiguriert ist, um eine Flüssigkeit auf die versiegelte Box (261) zu sprühen.

5. Tröpfchenausgabevorrichtung nach einem der Ansprüche 1 bis 4, weiter umfassend ein nadelähnliches Ausstoßelement (273) auf der Tröpfchenausstoßanordnung (27), die konfiguriert ist, um einen offenen Deckel (271) auf einem Umfang einer Vertiefungsöffnung (4b) der Mikroplatte (4) einzugreifen.

6. Tröpfchenausgabevorrichtung nach einem der Ansprüche 1 bis 5, weiter umfassend einen Bewegungsmechanismus (9, 10), der an die Basisplatte (3) und die Tröpfchenausstoßanordnung (27) befestigt und konfiguriert ist, um die Tröpfchenausstoßanordnung (27) zu bewegen, so dass Tröpfchen in jede Vertiefungsöffnung (4b) der Mikroplatte (4) ausgestoßen werden können.

7. Tröpfchenausgabevorrichtung nach einem der Ansprüche 1 bis 6, weiter umfassend:
eine Platte (21) mit einer ersten Fläche und einer zweiten Fläche, wobei die Tröpfchen über die zweite Fläche der Platte (21) ausgestoßen werden können;
eine Vielzahl von Druckkammern (210) auf der zweiten Fläche der Platte, wobei jede Druckkammer in der Vielzahl fluidisch mit einer entsprechenden Düse in der Vielzahl von Düsen verbunden ist;
eine Vielzahl von Betätigungsvorrichtungen (170), die einen Druck in einer entsprechenden Druckkammer ändert und verursacht, dass Flüssigkeit aus der entsprechenden Düse entladen wird; und
eine Vielzahl von Lösungshaltecontainern (22) auf der zweiten Fläche der Platte (21), wobei jeder einen Lösungsaufnahmeanschluss (22b) aufweist, um Flüssigkeit aufzunehmen, und einen Lösungsauslass (22a), um Flüssigkeit mit einer entsprechenden Druckkammer zu liefern.

8. Tröpfchenausgabevorrichtung nach einem der Ansprüche 1 bis 7, weiter umfassend eine Anzeigeeinheit (233), um Informationen der Tröpfchenausgabevorrichtung (1) anzuzeigen.

9. Analytisches System, umfassend eine Tröpfchenausgabevorrichtung nach einem der Ansprüche 1 bis 8.

10. Verfahren zum Betreiben einer Tröpfchenausgabevorrichtung (1), umfassend eine Tröpfchenausstoßanordnung (27) mit einer Vielzahl von Düsen (110), von denen Tröpfchen in jede Vertiefungsöffnung (4b) einer Mikroplatte (4) auf einer Basisplatte (3) ausgestoßen werden können, wobei das Verfahren Folgendes umfasst:
Messen eines Werts zum Nachweis einer Flüssigkeitsmenge in einer Mikroplatte (4); wobei der Wert eines von einem Gewicht der Mikroplatte (4) und einer Transparenz der Mikroplatte (4) ist, und
Bestimmen, dass eine Düse in der Vielzahl von Düsen (110) während eines Tröpfchenausstoßverfahrens basierend auf einer anfänglichen Flüssigkeitsmenge und einer endgültigen Flüssigkeitsmenge in der Mikroplatte (4), wie während eines Tröpfchenausstoßverfahrens nachgewiesen wird, in dem eine vorbestimmte Anzahl von Tröpfchen aus der Vielzahl von Düsen (110) in die Mikroplatte (4) ausgestoßen werden sollen, nicht entlädt,
**dadurch gekennzeichnet, dass** das Verfahren weiter Folgendes umfasst:
Berechnen einer erwarteten Reduktion aufgrund des Trocknens während des Tröpfchenausstoßverfahrens basierend auf einem anfänglich gemessenen Wert, entweder des Gewichts oder der Transparenz der Mikroplatte (4), und einem gemessenen Referenzwert entweder des Gewichts oder der Transparenz der Mikroplatte (4), gemessen zu einer vorbestimmten Zeit nach dem anfänglich gemessenen Wert entweder des Gewichts oder der Transparenz, und
Angeben, dass mindestens eine Düse in der Vielzahl von Düsen (110) nicht entlädt, wenn ein endgültiger gemessener Wert, entweder des Gewichts oder der Transparenz kleiner als der anfänglich gemessene Wert ist, entweder des Gewichts oder der Transparenz plus jeder erwarteten Zunahme aufgrund von Tröpfchen, die während des Tröpfchenausstoßverfahrens zwischen dem Zeitpunkt, an dem der anfänglich gemessene Wert, entweder des Gewichts oder der Transparenz, erhalten wurde, und an dem der endgültige gemessene Wert entweder des Gewichts oder der Transparenz erhalten wurde, minus der erwarteten Reduktion aufgrund des Trocknens.

11. Verfahren nach Anspruch 10, weiter umfassend:
Berechnen einer Trocknungsreduktionskurve (D) als eine Funktion der Zeit, die die gemessenen Werte bei jeder einer Vielzahl von eingestellten Zeiten ab dem Zeitpunkt, an dem der gemessene Wert erhalten wird, verbindet.

## Revendications

1. Appareil de distribution de gouttelettes (1) comprenant :
un système d'éjection de gouttelettes (27) ayant une pluralité de buses (110) depuis lesquelles des gouttelettes peuvent être éjectées dans une ouverture de puits (4b) d'une microplaque (4) sur une plaque de base (3) ;
un capteur (230, 240) configuré pour mesurer une valeur de détection d'une quantité de liquide dans la microplaque (4) ; le capteur étant l'un d'un dispositif de mesure de poids (230) qui mesure un poids de la microplaque (4) et d'un capteur de transparence (240) qui détecte une présence ou l'absence de gouttelettes éjectées par la buse (110) sans la pluralité de buses (110) sur la base d'une transparence mesurée ou détectée de la microplaque (4) ; et
un contrôleur (232, 242) configuré pour détecter qu'une buse de la pluralité de buses (110) n'évacue rien pendant un processus d'éjection de gouttelettes sur la base d'une quantité de liquide initiale dans la microplaque (4) détectée par le dispositif de mesure de poids (230) ou le capteur de transparence (240) et d'une quantité de liquide finale dans la microplaque (4) détectée par le dispositif de mesure de poids (230) ou le capteur de transparence (240) pendant un processus d'éjection de gouttelettes au cours duquel un nombre prédéterminé de gouttelettes doit être éjecté par la pluralité de buses (110) dans la microplaque (4),
**caractérisé en ce que** le contrôleur (232, 242) est en outre configuré pour :
calculer une réduction prévue due au séchage pendant le processus d'éjection de gouttelettes sur la base d'une valeur mesurée initiale de la microplaque (4) par le dispositif de mesure de poids (230) ou le capteur de transparence (240) et d'une valeur de référence mesurée de la microplaque (4) par le dispositif de mesure de poids (230) ou le capteur de transparence (240) au bout d'une durée prédéterminée à compter du moment où la valeur mesurée initiale est obtenue ; et
signaler qu'au moins une buse de la pluralité de buses (110) n'évacue rien lorsqu'une valeur finale mesurée est inférieure à la valeur mesurée initiale plus n'importe quelle augmentation prévue due aux gouttelettes éjectées pendant le processus d'éjection de gouttelettes entre le moment auquel la valeur mesurée initiale a été obtenue et celui auquel la valeur mesurée finale a été obtenue moins la réduction prévue due au séchage.

2. Appareil de distribution de gouttelettes selon la revendication 1, dans lequel le contrôleur (232, 242) est en outre configuré pour calculer une courbe de réduction de séchage (D) en fonction de la durée en reliant les valeurs mesurées par le dispositif de mesure de poids (230) ou le capteur de transparence (240) à chacun d'une pluralité de moments définis à compter du moment où la valeur mesurée initiale est obtenue.

3. Appareil de distribution de gouttelettes selon la revendication 1 ou 2, comprenant en outre une unité d'éjection de gouttelettes (251) en plus du système d'éjection de gouttelettes (27) configuré pour distribuer du liquide vers la microplaque (4) sur la plaque de base (3).

4. Appareil de distribution de gouttelettes selon l'une quelconque des revendications 1 à 3, comprenant en outre :
un boîtier fermé (261) qui contient le système d'éjection de gouttelettes (27) et au moins une partie de la plaque de base (3) ; et
un dispositif de pulvérisation (262) configuré pour pulvériser un liquide vers le boîtier fermé (261).

5. Appareil de distribution de gouttelettes selon l'une quelconque des revendications 1 à 4, comprenant en outre un élément d'éjection en forme d'aiguille (273) sur le système d'éjection de gouttelettes (27) configuré pour engager et ouvrir un couvercle (271) sur une périphérie d'une ouverture de puits (4b) de la microplaque (4).

6. Appareil de distribution de gouttelettes selon l'une quelconque des revendications 1 à 5, comprenant en outre un mécanisme de mouvement (9, 10) relié à la plaque de base (3) et au système d'éjection de gouttelettes (27) et configuré pour déplacer le système d'éjection de gouttelettes (27) de sorte que des gouttelettes puissent être éjectées dans chaque ouverture de puits (4b) de la microplaque (4).

7. Appareil de distribution de gouttelettes selon l'une quelconque des revendications 1 à 6, comprenant en outre :
un panneau (21) ayant une première surface et une seconde surface, dans lequel les gouttelettes peuvent être éjectées via la seconde surface du panneau (21) ;
une pluralité de chambres de pression (210) sur la seconde surface du panneau, chaque chambre de pression de la pluralité étant reliée de manière fluide à une buse respective de la pluralité de buses ;
une pluralité d'actionneurs (170) qui modifient une pression dans une chambre de pression respective et permettent au liquide d'être évacué par la buse respective ; et
une pluralité de réservoirs à solution (22) sur la seconde surface du panneau (21), qui possèdent chacun un orifice de réception de solution (22b) destiné à recevoir du liquide et une évacuation de solution (22a) destinée à fournir du liquide avec une chambre de pression respective.

8. Appareil de distribution de gouttelettes selon l'une quelconque des revendications 1 à 7, comprenant en outre une unité d'affichage (233) destinée à afficher des informations de l'appareil de distribution de gouttelettes (1).

9. Système d'analyse comprenant l'appareil de distribution de gouttelettes selon l'une quelconque des revendications 1 à 8.

10. Procédé de fonctionnement d'un appareil de distribution de gouttelettes (1) comprenant un système d'éjection de gouttelettes (27) ayant une pluralité de buses (110) depuis lesquelles des gouttelettes peuvent être éjectées dans une ouverture de puits (4b) d'une microplaque (4) sur une plaque de base (3), le procédé comprenant :
la mesure d'une valeur de détection d'une quantité de liquide dans la microplaque (4) ; la valeur étant l'une d'un poids de la microplaque (4) et d'une transparence de la microplaque (4), et
la détermination du fait qu'une buse de la pluralité de buses (110) n'évacue rien pendant un processus d'éjection de gouttelettes sur la base d'une quantité de liquide initiale et d'une quantité de liquide finale dans la microplaque (4) détectée pendant un processus d'éjection de gouttelettes au cours duquel un nombre prédéterminé de gouttelettes doit être éjecté par la pluralité de buses (110) dans la microplaque (4),
**caractérisé en ce que** le procédé comprend en outre :
le calcul d'une réduction prévue due au séchage pendant le processus d'éjection de gouttelettes sur la base d'une valeur mesurée initiale, soit le poids ou la transparence, de la microplaque (4) et d'une valeur mesurée de référence, soit le poids ou la transparence, de la microplaque (4) mesurée à un moment prédéterminé après que la valeur mesurée initiale, soit le poids ou la transparence, a été obtenue, et
le fait d'indiquer qu'au moins une buse de la pluralité de buses (110) n'évacue rien lorsqu'une valeur mesurée finale, soit le poids ou la transparence, est inférieure à la valeur mesurée initiale, soit le poids ou la transparence, plus toute augmentation prévue due aux gouttelettes éjectées pendant le processus d'éjection de gouttelettes entre le moment auquel la valeur mesurée initiale, soit le poids ou la transparence, a été obtenue et le moment auquel la valeur mesurée finale, soit le poids ou la transparence, a été obtenue moins la réduction prévue due au séchage.

11. Procédé selon la revendication 10, comprenant en outre :
le calcul d'une courbe de réduction due au séchage (D) en fonction de la durée en reliant les valeurs mesurées à chacun d'une pluralité de moments définis à compter du moment auquel la valeur mesurée initiale est obtenue.
